# EUROPEAN PATENT SPECIFICATION

(11) **EP 0 669 898 B1**
(45) Date of publication and mention of the grant of the patent: **25.02.1998**
(21) Application number: 94903123.1
(22) Date of filing: 19.11.1993
(51) Int. Cl.: C02F 1/52, B01D 61/16, C02F 5/02

(54) **METHOD FOR REMOVING AT LEAST ONE CONSTITUENT FROM A SOLUTION**
VERFAHREN ZUR BESEITIGUNG VON WENIGSTENS EINEM BESTANDTEIL AUS EINER LÖSUNG
PROCEDE D'EXTRACTION D'AU MOINS UN CONSTITUANT D'UNE SOLUTION

(30) Priority: 19.11.1992 NL 9202017
(43) Date of publication of application: 06.09.1995
(73) Proprietor: NEDERLANDSE ORGANISATIE VOOR TOEGEPAST-NATUURWETENSCHAPPELIJK ONDERZOEK TNO, 2628 VK Delft (NL)
(72) Inventor: VERDOES, Dirk, NL-2224 AJ Katwijk (NL); HENEMAAIJER, Jan, Hendrik, NL-6862 AB Oosterbeek (NL)
(74) Representative: de Bruijn, Leendert C.
(86) International application number: NL9300245
(87) International publication number: WO9411309

(56) References cited:
- WO-A-79/01052
- NL-A- 8 800 138
- US-A- 4 014 787
- DATABASE WPI Week 8451, Derwent Publications Ltd., London, GB; AN 84-315103 & JP,A,59 196 798 (SHOKUBAI KASEI KOGYO) 8 November 1984

## Description

The invention relates in the first instance to a method for removing at least one constituent from a solution, comprising:
- bringing together said solution, a particulate seed material and one or more substances which cause the constituent to be removed to crystallize out on the seed material, and
- separating the seed material having a substance crystallized out thereon.

It is known to employ such a method with the aid of a so-called pellet reactor. In this case, the solution is injected into the lowermost part of a cylindrical reactor vessel, and by maintaining a suitable flow of water through the reactor vessel the seed particles are maintained in a fluidized bed. The topmost level of the fluidized bed is several metres below the top of the reactor vessel. Near the underside of the fluidized bed, one or more chemicals are admixed to the solution, resulting in the solution becoming supersaturated with regard to a substance which in part consists of the ion to be removed. The required counter-ion is present in the added stream of chemical or is produced by a reaction of the waste stream with the added chemicals. The substance consisting of the ion to be removed and the counter-ion crystallizes out on the surface of the particles of seed material, pellets being formed in the process. The intention is to avoid the presence, in the bulk of the solution, of precipitate of the substance crystallized out. Important aspects in doing so are the choice of a suitable seed material and control of the supersaturation by dosing said chemicals. The particles of seed material must be maintained in a fluidized bed in order to prevent them from clotting together when said substance crystallizes out. The supersaturation, which forms the driving force for crystallization, is highest at the bottom of the reactor and goes to zero at the top of the reactor. The pellets at the bottom of the reactor will thus grow more quickly than the pellets at the top of the fluidized bed. The heavier pellets at the bottom of the reactor will remain there and, having reached a certain size, are removed continuously or periodically. At the same time, an identical number of fresh seed particles is added at the top of the fluidized bed in order to keep constant the concentration of the seed material.

Pellet reactors can be used, inter alia, for purifying waste water, softening water, removing heavy-metal ions, removing phosphates from sewage and even for biological denitrification with the aid of bacteria.

When water is softened, a basic liquid or suspension (NaOH, Na₂CO₃ or Ca(OH)₂) is fed in at the bottom of the reactor, the CO₃²⁻ concentration increasing in the mixed solution and supersaturation of CaCO₃ being achieved. The CO₃²⁻ ions come from HCO₃⁻ ions in the water or from the base (in the case of adding Na₂CO₃). Removal of mercury, lead, copper, nickel, zinc, cadmium and other heavy metals can likewise be carried out by crystallizing out metal salts such as, for example, carbonates. When phosphates are removed, calcium phosphate crystallizes out on the particles of seed material.

Although the investment costs for a pellet reactor are low, and the grains obtained can sometimes be utilized (for example as chicken feed or for neutralizing acid) there are also considerable drawbacks associated with removing a constituent from a solution with the aid of a pellet reactor. Thus the treated liquid (for example decalcified water) requires secondary treatment because it still contains small solid particles. This secondary treatment may, for example, consist of the treated liquid being passed through an anthracite-sand filter. One cause of the presence of the small loose particles in the effluent is the erosion of the seed material and/or the pellets due to the strong turbulence, required for optimum mixing, in the pellet reactor. Another cause is the formation of homogeneous, loose, small CaCO₃ crystals (microcrystals) due to local high supersaturation in the bulk of the solution.

A second drawback of using the known pellet reactor is the fact that the specific area of the seed grains (that is the crystallizing area) is low, because the seed grains, in order to prevent them from being flushed out, must not be too small (for example, they have a diameter of 0.6 mm, corresponding to a specific area of 3.8 m² per kg). The rate of crystallization depends, inter alia, on the crystallization area present. A low specific area means that a relatively large amount of seed material must be added, and therefore also that the reactor, in order to achieve a certain capacity, must have a relatively large volume.

In order to maintain the fluidized bed, an essentially constant flow rate must be maintained, so that the flexibility with regard to flow rate fluctuations is very limited, because this would lead directly to settling or, as the case may be, flushing out of the fluidized particles. This also means that the residence time in a pellet reactor, and thus the reaction/crystallization time, is a quantity which virtually cannot be varied.

The object of the invention is to overcome these drawbacks, and to this end the particles of the seed material have a size between 0.1 and 50 µm (0.1·10⁻⁶ metres and 50·10⁻⁶ metres), the mixture of liquid and seed material having substance crystallized out thereon is passed through a membrane filter for microfiltration, which filter has such a pore size between 30 nm (30·10⁻⁹ metres) and 25 µm (25·10⁻⁶ metres) that the liquid does and the seed material does not permeate through the membrane.

The very small seed particles have a high specific area, so that the same seed mass provides more crystallization area. Moreover, the diffusion distances are shorter. Consequently, crystallization can take place much more rapidly, as a result of which the apparatus can be much smaller (for example by a factor of more than 10). For the same crystallization area, much (more than one order of magnitude) less seed material is required. The pellets formed are smaller and as a result can be applied in more ways, for example as a filler. The pellets are much less contaminated with the seed material. In the conventional pellet reactor, from 15 to 30% of the pellets consists of seed material, if the method according to the invention is employed, this percentage is, for example, only 0.2%.

Secondary treatment of the liquid in an anthracite-sand filter or the like, to remove microcrystals, is no longer necessary if the invention is employed. In the case of treatment of water, the use of the microfiltration membrane according to the invention also makes it possible to remove viruses and bacteria, as a result of which, in addition to softening or, as the case may be, the removal of metal, disinfection takes place at the same time.

A wider scope is available for tailoring the type of the seed material to the desired result, in particular with regard to improved interaction with the substance to be crystallized out.

Because no use is made of a fluidized bed, and thus it is not necessary to allow for minimum and maximum flow velocities to maintain a fluidized bed, the method according to the invention provides much wider choice with respect to the liquid flow rate and the residence time (reaction time) to be employed.

In general, the smaller equipment will result in low total investment costs.

It is pointed out that WO-A-7901052 discloses a method for preventing fouling of semi-permeable membranes in an apparatus which is designed for separating a solvent from a dissolved substance. This involves adding seed material having a size between 1 and 100 µm (1-100·10⁻⁶ metres) to the liquid stream. No substance is added which causes the constituent to be removed to crystallize out; indeed, no crystallizer is present. The seeds are only added because supersaturation takes place in the membrane process employed, and then serve to prevent here the occurrence of homogeneous crystallization, resulting in fouling of the membrane. The membrane is suitable for reverse osmosis, electrodialysis or ultrafiltration or the like, i.e. the pores are smaller than 1 nm (10⁻⁹ metres). In fact, the ions to be removed are held back at the place of the membrane, which causes the ion concentration in the vicinity of the membrane to increase and crystallization to occur. In the method according to the present invention, crystallization has taken place on the seed material as a result of adding crystallization-promoting substances, before the liquid stream has reached the membrane unit. Furthermore, the invention is limited to the use of membranes for microfiltration, in which the membrane forms a relatively coarse sieve, having no capacity at all to hold back ions, and thus not resulting in local supersaturation, in contrast to the membranes for reverse osmosis, electrodialysis and ultrafiltration as used in WO-A-7901052.

Reference is also made to US-A-4014787. This publication describes the removal of heavy-metal ions from waste water. This involves adding substances to the liquid stream, which lead to flocculation of the metals to be removed, together with ions of the added substance (such as metal hydroxide). No seed material is added. With the aid of ultrafiltration membranes, the flocculated material is removed from the liquid. In contrast, the invention is based on the idea of adding certain substances to cause constituents to crystallize out on very small seed particles and to remove the particles with the aid of microfiltration membranes.

Preferably, the size of the membrane pores is 10-50% of the size of the seed material particles.

The seed material may in principle consist of any type of particle; the only restriction is the size (between 0.1 and 50 µm). Examples of such seed materials are: mineral clay types (such as bentonite), silicas, silicates and diatoms.

If the invention is applied to softening water, the pH of the solution will be increased to precipitate CaCO₃ on the seed material.

If the invention is used to remove heavy-metal ions, a metal salt (carbonate, sulphide, phosphate, sulphate, fluoride, chromate. hydroxycarbonate and the like), or metal hydroxide will crystallize out on the seed material.

If the invention is used to remove anions, for example fluorides, phosphates and sulphates, a salt (for example a Ca/Al/Mg salt) will crystallize out on the seed material.

Preparation of ultra-pure products from aqueous solutions or organic mixtures is likewise possible by using the method according to the invention.

The invention will now be explained in more detail with reference to the schematic figures.

Figure 1 shows a process scheme for softening water with the aid of microfiltration.

Figure 2 shows a process scheme as an alternative for the scheme according to Figure 1.

Figure 3 shows a process scheme of a laboratory set-up.

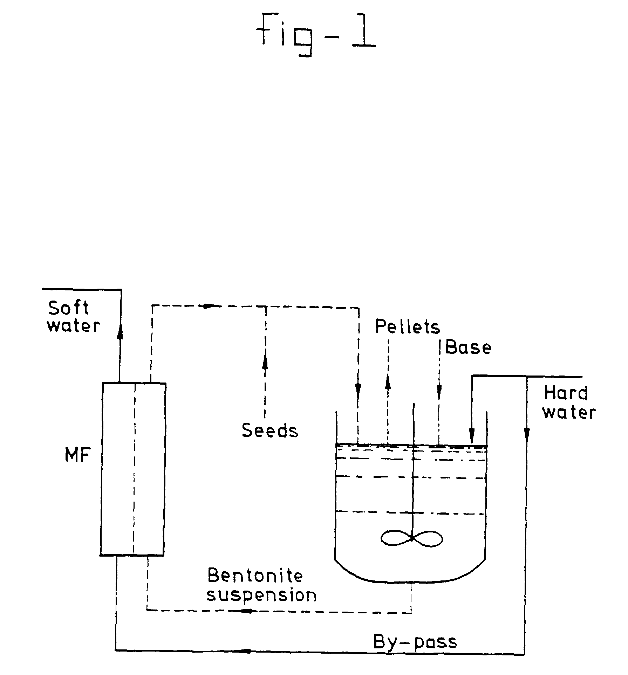

In the case of the water-softening method depicted schematically in Figure 1, the seed material employed is, for example, bentonite. This clay is found to be a better substrate material for CaCO₃ crystallization than small CaCO₃ crystals. The reason for this is the rough surface and the associated high specific area. Incidentally, bentonite cannot be employed in a known pellet reactor, because the particle size is too small. The kinetics of the removal of Ca ions is linearly dependent on the area available for crystallization, which favours very small seed material particles. The feed stream of hard water having a content of Ca ions of 2.5 mmol Ca²⁺/litre is reduced to 1.5 mmol Ca²⁺/litre by softening only 50% of the feed water. This means that the effluent of the softening unit may contain at most 0.5 mmol Ca²⁺/litre. As a result of this effluent then again being mixed with the water which is discharged by the bypass, water having the required hardness is obtained.

Figure 1 shows that in a continuously stirred tank reactor hard water is mixed with a base and a bentonite suspension. The base ensures that the solution becomes supersaturated in CaCO₃, and that crystallization of CaCO₃ takes place on the surface of the bentonite particles. The function of the microfiltration membrane MF is to separate the seed particles and the fully grown pellets from the soft water. Said soft water passes through the membrane and is mixed with the bypass stream of hard water.

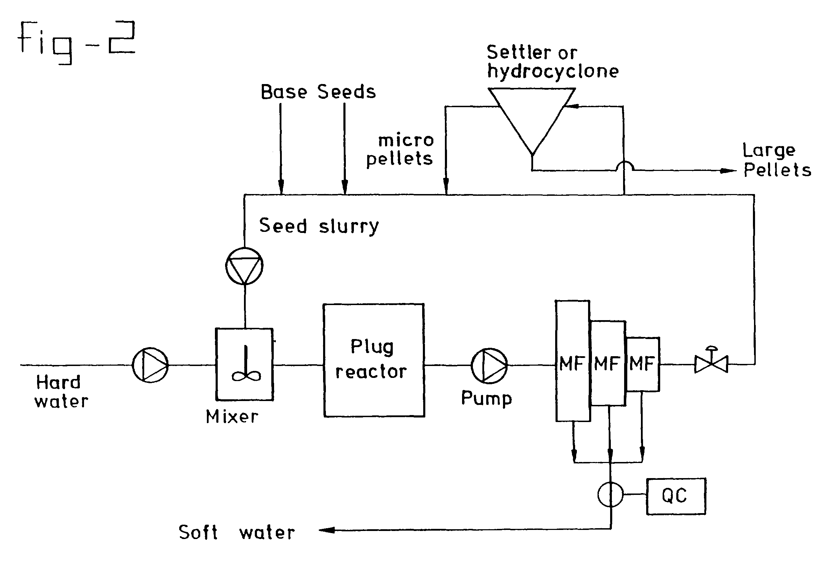

According to the scheme of Figure 2, the entire stream of hard water is softened, although there is no objection to the main stream being split into a bypass stream and a stream to be softened and the subsequent merging of the bypass stream and the softened stream. Further differences with Figure 1 include employing a plug stream crystallization reaction instead of a stirred tank reactor, and a settler or hydrocyclone for removing pellets, and a quality control device (QC) having been added. The microfiltration membrane device consists of membrane modules connected both in parallel and in series, in a so-called "single-pass" configuration. The volume of the recirculation stream of the bentonite suspension is small: only 0.05-1% of the feed stream. This stream may also be chosen to be larger, as a result of which the total mass of seed material after mixing can be larger, and the crystallization can be further accelerated.

The size of the seed material particles will usually be between 0.1 µm and 50 µm (0.1 × 10⁻⁶ m - 50 × 10⁻⁶ m). In those applications, where simultaneous disinfection is important, the size is preferably between 0.1 µm and 1 µm. In those applications, where a high flux is important, the size will preferably be between 1 µm and 50 µm.

The membrane pores will have a size in the range between 30 nm and 25 µm (30 × 10⁻⁹ m - 25 × 10⁻⁶ m). The pore size will preferably be between 10 and 50% of the particle size, with as narrow as possible a size distribution.

A normal size of the seed particles in a conventional pellet reactor is 0.6 mm. The seed particles in that case each have a volume of 0.11 × 10⁻⁹ m³, a weight of 0.3 × 10⁻⁶ kg and an area of 1.13 × 10⁻⁶ m². The specific area of the seed particles is 3.8 m² per kg. A typical pellet reactor for softening (capacity 1200 m³/hour) contains 20,000 kg of said particles and has a volume of 70 m³.

In the case of a seed particle size, defined as the diameter, of 1 µm (1 × 10⁻⁶ m), the specific area is 2,400 m² per kg. This means that 35 kg of seed particles are required for 80,000 m². In the case of the conventional pellet reactor, a surface of 80,000 m² requires 20,000 kg of seed material. The corresponding reactor volume, when employing seed particles having a diameter of 1 µm, is 350 litres, based on a slurry density of 10% by weight; a reduction in volume by a factor of 200.

In the case of particles having a diameter of 20 µm (20 × 10⁻⁶ m), the specific area is 120 m² per kg. This means that 667 kg of seed particles correspond to an area of 80,000 m². The corresponding reactor volume is 7 m³, based on a slurry density of 10% by weight, a reduction in volume by a factor of 10.

An essential aspect of the invention is the use of very small particles of seed material (less than 50 µm) and the fact that the mixture of liquid and seed material having substance crystallized out thereon is separated by means of microfiltration membrane filters. Within the scope of the claims, various modifications and additions are possible.

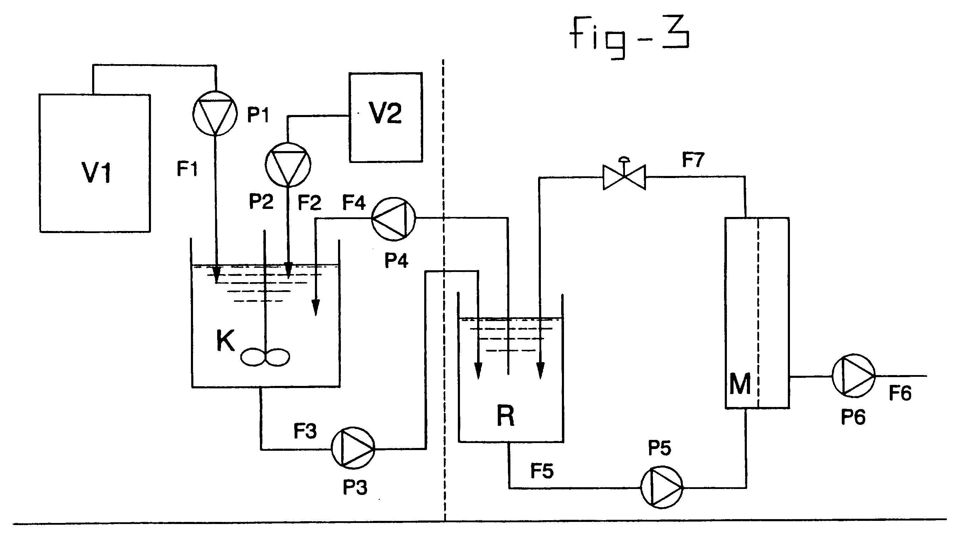

The set-up according to Figure 3 consists of a crystallization section to the left of the broken line and a membrane filtration section, coupled thereto, to the right of the broken line.

The designations have the following meaning:
- V1 =: reservoir of ion to be removed
- V2 =: reservoir for counter-ion
- K =: crystallizer (approximately 1 litre, CSTR)
- R =: recirculation or reservoir filtration (approximately 20 litres)
- M =: membrane filtration unit
- P =: pumps
- F1 =: feed of ion to be removed
- F2 =: feed of counter-ion
- F3 =: effluent of crystallizer
- F4 =: seed and pellet suspension
- F5 =: feed of membrane unit (suspension)
- F6 =: permeate
- F7 =: retentate (suspension)

Figure 3 shows the process scheme of a laboratory set-up in which it is possible to study the various (part) aspects and applications of the method specified in more detail in the claims.

The set-up in Figure 3 consists of a crystallization section which is coupled to a membrane filtration section.

The crystallization section consists of a continuously stirred tank reactor (the crystallizer), various pumps and two reservoirs for, respectively, the stream containing the constituent to be removed, and the substances to be added to this stream, which cause the constituent to be removed to crystallize out on the seed material. The effluent of this crystallizer is collected in the reservoir of the filtration section. The membrane filtration section consists, in addition to the reservoir already mentioned, of two pumps, a number of flowmeters and pressure meters and a membrane unit, into which various types of membranes can be placed. The reservoir contains a concentrated suspension of small-sized seed material and serves as a buffer vessel for the filtration section and as a reservoir for the seed material to be added to the crystallizer.

### EXAMPLE 1

In this example, only the filtration section of the set-up in Figure 3 was used to test the behaviour of various types of microfiltration membranes during filtration of relatively concentrated aqueous suspensions of small-size seed material (size approximately from 2 µm to 20 µm).
The seed material used comprised calcium silicate particles having a mean diameter of 2.5 µm. The reservoir of the filtration section was filled with suspension containing 3% by weight of seed material in distilled water. During the experiments, the permeate was recycled to the reservoir. Table 1 gives an overview of the membranes tested and the results of the filtration experiments.

**TABLE 1**

| | Membrane 1 | Membrane 2 | Membrane 3 |
|---|---|---|---|
| Material | Polymer | Ceramic | Ceramic |
| Area | 300 cm² | 550 cm² | 550 cm² |
| Pore size | 0.2 µm | 0.2 µm | 0.8 µm |
| J_{cw} | 2.5 m³/m²·hour·bar | 0.9 m³/m²·hour·bar | 1.5 m³/m²·hour·bar |
| Jₛᵤₛₚ | 0.4 m³/m²·hour·bar | 0.5 m³/m²·hour·bar | 0.55 m³/m²·hour·bar |

The values J_{cw} and Jₛᵤₛₚ represent the measured permeate fluxes of the membrane under static conditions during filtration of "clean (distilled) water", and during the filtration of the abovementioned suspension, respectively. It is evident that, using various types of membranes, high throughputs can be achieved if an effective selection in terms of pore size is made.

### EXAMPLE 2

A beaker was filled with 225 ml of a mixed Na₂CO₃/NaHCO₃ solution ([Na₂CO₃]=1.63 mmol/l, [NaHCO₃]=2.47 mmol/l]), and a known amount of seed material. A supersaturated CaCO₃ solution was created by mixing the vessel contents with 25 ml of a CaCl₂ solution ([CaCl₂]=25 mmol/l). After mixing, the solution contains 100 mg of Ca²⁺ per litre and 250 mg of Total Carbonate (CO₃²⁻ + HCO₃⁻) per litre. The pH of the solution after mixing is 9.65. Crystallization of CaCO₃ was followed by monitoring the change of pH as a function of time. The measured pH was used to calculate, with the aid of the various equilibria and the mass and electroneutrality balances, how much CaCO₃ (s) had been formed at a particular moment. Table 2 gives an overview of the circumstances and the amount of CaCO₃ (s) formed at various reaction times for a blank experiment (in the absence of seed material), an experiment with large-size seed material (Exp. I) and three experiments with relatively small seeds (Exp. II-IV). The large-size seed material consisted of sand particles which are also employed in a pellet reactor, the percentage by weight of said seed material (10% by weight) also being representative of the situation in a pellet reactor. The small-size seed material consisted of calcium silicate particles having a mean particle size of 10 µm. Table 2 demonstrates that the crystallization of CaCO₃ proceeds much more rapidly in the presence of small-size seed material, even- if the percentage by weight of said seed material during the experiment is 10-100 times lower than in the reference experiment for the pellet reactor with the "large" sand seeds.

**TABLE 2**

| | Blank | Exp.I | Exp.II | Exp.III | Exp.IV |
|---|---|---|---|---|---|
| Seed material | none | sand | calcium silicate | calcium silicate | calcium silicate |
| Seeds in % by weight | ---- | 10% by weight | 0.1% by weight | 0.4% by weight | 1.0% by weight |
| CaCO₃ (s) t = 30 sec | 0 mg/l | 35 mg/l | 90 mg/l | 105 mg/l | 130 mg/l |
| CaCO₃ (s) t = 60 sec | 0 mg/l | 90 mg/l | 125 mg/l | 135 mg/l | 160 mg/l |
| CaCO₃ (s) t = 120 sec | 100 mg/l | 135 mg/l | 145 mg/l | 160 mg/l | 170 mg/l |
| CaCO₃ (s) t = 300 sec | 150 mg/l | 155 mg/l | 170 mg/l | 170 mg/l | 170 mg/l |

### EXAMPLE 3

A beaker was filled with 225 ml of a mixed Na₂CO₃/NaHCO₃ solution, with or without the presence of 1 gram of bentonite (a small-size seed material having a mean particle size of 5 µm). This solution was mixed at t=O s with 25 ml of a metal solution whose MeCl₂ concentration was such that the Me²⁺ concentration after mixing in the beaker was 100 ppm at all times. The starting materials used were pure Cu²⁺ or Cd²⁺ solutions or a mixture of the said two Me²⁺ ions. The total concentration of carbonate-containing ions, being the sum of CO₃²⁻ and HCO₃⁻ ions, was 5 mmol/l (even after mixing). In this way, a supersaturated MeCO₃ solution was created, in analogy to the method in Example 2. The pH of this solution after mixing was 10.0 at all times. The crystallization of MeCO₃ was followed by monitoring the change of the pH as a function of time.
At the end of the crystallization, this being the time when the pH of the solution no longer changes, the suspension was filtered, and the residual concentration of Me²⁺ in the filtrate was analysed with the aid of Inductively Coupled Plasma (I.C.P.). The residual concentrations measured are shown in Table 3.

Table 3 shows that the added metals are removed to more than 99% by means of the crystallization carried out.
When Cu²⁺ was removed, the crystallization proceeded more rapidly in the presence of bentonite: the pH became constant after 10 minutes in Experiment IA and after only 2 minutes in Experiment IB.
A notable aspect of Experiment III (with the mixed Cu²⁺/Cd²⁺ solution) is the fact that in the presence of bentonite (Exp. IIIB) a lower residual concentration of Cd²⁺ is achieved.

**Table 3**

| | Seeds | Initial [Cu²⁺] | Residual [Cu²⁺] | Initial [Cd²⁺] | Residual [Cd²⁺] |
|---|---|---|---|---|---|
| Exp.IA | none | 100 mg/l | 0.4 mg/l | ---- | ---- |
| Exp.IB | 1 g/l | 100 mg/l | 0.4 mg/l | ---- | ---- |
| Exp.IIA | none | ---- | ---- | 100 mg/l | 0.01 mg/l |
| Exp.IIB | 1 g/l | ---- | ---- | 100 mg/l | 0.01 mg/l |
| Exp.IIIA | none | 100 mg/l | 0.1 mg/l | 100 mg/l | 1.9 mg/l |
| Exp.IIIB | 1 g/l | 100 mg/l | 0.2 mg/l | 100 mg/l | 0.3 mg/l |

### EXAMPLE 4

The removal of sulphate ions (SO₄²⁻) was studied by means of the crystallization of gypsum (calcium sulphate dihydrate, CaSO₄·2H₂O). Crystallization was carried out in the absence and presence of seeds. The starting material was a supersaturated solution containing 60 ppm (mg/l) of Ca²⁺ and 2,900 ppm of So₄²⁻ ions, which corresponds to a relative supersaturation of 100%. The temperature during the experiments was kept constant at 25°C, the volume of the supersaturated solution was 250 ml with a pH of 5.0. Three experiments were carried out. In the first experiment, no seed material was added (blank). In the second experiment, 25 grams of sand particles having a mean diameter of 200-600 µm were used as the seed material. This material is representative of the seeds employed in a pellet reactor. In the third experiment, 2.5 grams of SiO₂ particles having a mean diameter of 1 µm were used. These seeds were selected in order to study the influence of relatively small-size seed material. The supersaturated solution was made up and (if required), the seed material was added. The crystallization of CaSO₄·2H₂O was followed by monitoring the conductivity of the solution.
With the blank experiment, it took 40 hours before the level of constant conductivity, corresponding to the conductivity of a saturated CaSO₄ solution, was reached. Crystallization in the presence of the "large" sand seeds proceeded more rapidly, and in that case took 30 hours to reach the level of the saturated solution. The most rapid progress of the crystallization occurred in the presence of the small-size SiO₂ seed material, where crystallization was complete after only 20 hours of reaction time.

### EXAMPLE 5

The laboratory MAC installation depicted in Figure 3 was employed to study the crystallization of CaCO₃ on small-size seed material. Table 4 gives the magnitude of the various streams during three experiments (M 1 - M 3) using this set-up. The residence time T in the crystallizer (CSTR) was varied, while the composition and the volume ratios of the input streams were kept constant.

**TABLE 4**

| | Exp. M 1 | Exp. M 2 | Exp. M 3 |
|---|---|---|---|
| τ (min) | 10 | 5 | 2 |
| F1 (1/hour) | 5.76 | 11.53 | 28.82 |
| F2 (1/hour) | 0.036 | 0.072 | 0.180 |
| F3 (1/hour) | 6.0 | 12.0 | 30.0 |
| F4 (1/hour) | 0.2 | 0.4 | 1.0 |
| F5 (1/hour) | 5000 | 5000 | 5000 |
| F6 (1/hour) | 5.8 | 11.6 | 29.0 |
| F7 (1/hour) | 4994.2 | 4988.4 | 7471.0 |

The input stream of "hard" water (F1) contained 100 ppm of Ca²⁺ (mg/l) and 250 ppm of HCO₃⁻. The crystallizer contained 1 gram of small-size seed material per litre, in the form of calcium silicate seeds having a mean diameter of 2.5 µm. The recirculation vessel of the filtration contained a suspension having 30 grams of calcium silicate per litre. The percentage by weight of the seed material in the crystallizer was 1 gram per litre (0.1% by weight) for all experiments. Filtration was carried out employing a microfiltration membrane module made of ZrO₂, having a mean pore size of 0.2 µm.
At regular intervals (after 24, 36 and 72 residence times) samples were taken both of the effluent of the crystallizer (stream F3) and of the permeate stream (stream F6). The effluent was first filtered through a 0.22 µm filter, then acidified with HCl, and the residual concentration of Ca²⁺ was then determined with AAS. The permeate was acidified directly, and then the [Ca²⁺] was determined.
In all the samples of the experiments specified above, a residual concentration of Ca²⁺ of 2-3 ppm (mg/l) was measured both in the effluent of the crystallizer and in the permeate. The Ca²⁺ concentration in a saturated CaCO₃ solution under the given conditions is 2 ppm. Hence it can be concluded that Ca²⁺ under the given conditions is removed (virtually) completely by employing small-size seed material. In a pellet reactor, a residence time of 3-5 minutes is usually employed, while in the case of water-softening (via the crystallization of CaCO₃ on "large" sand seeds) a mean residual concentration of Ca²⁺ in the effluent of 30 ppm is achieved.

### EXAMPLE 6

In another series of experiments, the continuous crystallization of CaCO₃ on small-size seed material was studied separately, shorter residence times being investigated than in Example 5. In comparison with the experiments in Example 5, use was now made only of the crystallization part of the set-up in Figure 3. The composition of the input streams was identical to the experiments in Example 5. The recirculation vessel of the filtration was in this case used as a reservoir for the suspension of small-size seed material. The seed material was not recirculated in these experiments, but passed through the crystallizer according to the "once-through" principle. The composition of the suspension and the feed material used in the experiments is again identical to the experiments in Example 5.
Samples were taken of the effluent of the crystallizer (Stream F3) after 24, 36 and 72 residence times, and these were treated and analysed in the same way as in Example 5.
Table 5 gives the magnitude of the various streams during three experiments (M 4 - M 6) with this set-up. The residence time τ in the crystallizer (CSTR) was varied between 0.5 and 2 minutes, while the composition and the volume ratios of the input streams were kept constant.

**TABLE 5**

| | Exp. M 4 | Exp. M 5 | Exp. M 6 |
|---|---|---|---|
| τ (min) | 2.0 | 1.0 | 0.5 |
| Volume crystallizer (1) | 1.0 | 1.0 | 0.75 |
| F1 (1/hour) | 28.91 | 57.82 | 86.73 |
| F2 (1/hour) | 0.090 | 0.180 | 0.270 |
| F3 (1/hour) | 30.0 | 60.0 | 90.0 |
| F4 (1/hour) | 1.0 | 2.0 | 3.0 |
| F5 (1/hour) | ---- | ---- | ---- |
| F6 (1/hour) | ---- | ---- | ---- |
| F7 (1/hour) | ---- | ---- | ---- |

In all the samples of the experiments specified above, a residual concentration of Ca²⁺ of 2-3 ppm (mg/l) was measured in the effluent of the crystallizer. The Ca²⁺ concentration in a saturated CaCO₃ solution under the given conditions is 2 ppm. Hence it can be concluded that Ca²⁺ is removed effectively even with shorter residence times than in Example 5 by employing small-size seed material. The size of the seed material and the percentage by weight of the seeds during crystallization are smaller by (more than) a factor of 100 than in the pellet reactor. It is found that as a result of employing small-size seed material, shorter residence times are possible together with a higher removal efficiency for Ca²⁺ than in a pellet reactor (see text example 5 for the data for the pellet reactor).

## Claims

1. Method for removing at least one constituent from a solution, comprising:
- bringing together said solution, a particulate seed material and one or more substances which cause the constituent to be removed to crystallize out on the seed material, and
- separating the seed material having a substance crystallized out thereon,
characterized in that the particles of the seed material have a size between 0.1 and 50 µm (0.1·10⁻⁶ metres and 50·10⁻⁶ metres), and that the mixture of liquid and seed material having substance crystallized out thereon is passed through a membrane filter for microfiltration, which filter has such a pore size between 30 nm (30·10⁻⁹ metres) and 25 µm (25·10⁻⁶ metres) that the liquid does and the seed material does not permeate through the membrane.

2. Method according to Claim 1, characterized in that the size of the membrane pores is 10-50% of the size of the seed material particles.

3. Method according to Claim 1 or 2, characterized in that the seed material consists of a mineral clay type such as, for example, bentonite.

4. Method according to Claim 1 or 2, characterized in that the seed material consists of silica particles.

5. Method according to Claim 1 or 2, characterized in that the seed material consists of silicates.

6. Method according to Claim 1 or 2, characterized in that the seed material consists of diatoms.

7. Method according to any one of the preceding claims, characterized in that the method is used for softening water, the pH of the solution being increased to precipitate CaCO₃ on the seed material.

8. Method according to any one of Claims 1-6, characterized in that the method is employed for removing heavy-metal ions by means of metal salt (carbonate, sulphide, phosphate, sulphate, fluoride, chromate and the like) or metal hydroxide crystallizing out on the seed material.

9. Method according to any of Claims 1 to 6 inclusive, characterized in that the method is used for preparing ultra-pure products from aqueous solutions or organic mixtures.

10. Method according to any of Claims 1 to 6 inclusive, characterized in that the method is used for removing anions such as phosphates, sulphates, nitrates and the like by crystallization of a salt of said anion on the seed material.

## Patentansprüche

1. Verfahren zum Entfernen von mindestens einem Bestandteil aus einer Lösung, umfassend:
- Zusammenbringen der Lösung, eines teilchenförmigen Keimmaterials und einer oder mehrerer Substanzen, welche bewirken, daß der zu entfernende Bestandteil auf dem Keimmaterial auskristallisiert und
- Abtrennen des Keimmaterials mit einer darauf auskristallisierten Substanz,
**dadurch gekennzeichnet**, daß die Teilchen des Keimmaterials eine Größe zwischen 0,1 und 50 µm (0,1·10⁻⁶m und 50·10⁻⁶m) aufweisen und daß das Gemisch aus Flüssigkeit und Keimmaterial mit darauf auskristallisierter Substanz durch einen Membranfilter zur Mikrofiltration geleitet wird, wobei der Filter eine solche Porengröße zwischen 30 nm (30·10⁻⁹m) und 25 µm (25·10⁻⁶m) aufweist, das die Flüssigkeit die Membran durchdringt und das Keimmaterial nicht.

2. Verfahren nach Anspruch 1, **dadurch gekennzeichnet**, daß die Größe der Membranporen 10 bis 50 % der Größe der Keimmaterialteilchen beträgt.

3. Verfahren nach Anspruch 1 oder 2, **dadurch gekennzeichnet**, daß das Keimmaterial aus einer Mineraltonart, wie etwa z.B. Bentonit, besteht.

4. Verfahren nach Anspruch 1 oder 2, **dadurch gekennzeichnet**, daß das Keimmaterial aus Siliciumoxidteilchen besteht.

5. Verfahren nach Anspruch 1 oder 2, **dadurch gekennzeichnet**, daß das Keimmaterial aus Silikaten besteht.

6. Verfahren nach Anspruch 1 oder 2, **dadurch gekennzeichnet**, daß das Keimmaterial aus Diatomeen besteht.

7. Verfahren nach einem der vorhergehenden Ansprüche, **dadurch gekennzeichnet**, daß das Verfahren zum Enthärten von Wasser verwendet wird, wobei der pH-Wert der Lösung erhöht wird, um CaCO₃ auf dem Keimmaterial zu präzipitieren.

8. Verfahren nach einem der Ansprüche 1 bis 6, **dadurch gekennzeichnet**, daß das Verfahren zum Entfernen von Schwermetallionen mittels eines Metallsalzes (Carbonat, Sulfid, Phosphat, Sulfat, Fluorid, Chromat und dergleichen) oder eines Metallhydroxides, welches auf dem Keimmaterial auskristallisiert, verwendet wird.

9. Verfahren nach einem der Ansprüche 1 bis einschließlich 6, **dadurch gekennzeichnet**, daß das Verfahren zur Herstellung ultrareiner Produkte aus wäßrigen Lösungen oder organischen Gemischen verwendet wird.

10. Verfahren nach einem der Ansprüche 1 bis einschließlich 6, **dadurch gekennzeichnet**, daß das Verfahren zum Entfernen von Anionen, wie etwa Phosphaten, Sulfaten, Nitraten und dergleichen durch Kristallisation eines Salzes des Anions auf dem Keimmaterial verwendet wird.

## Revendications

1. Procédé pour extraire au moins un constituant d'une solution, consistant:
- à amener ensemble ladite solution, une matière de germination particulaire et une ou plusieurs substances qui forcent le constituant à extraire à cristalliser sur la matière de germination; et
- à séparer la matière de germination ayant sur elle une substance cristallisée;
caractérisé en ce que les particules de la matière de germination ont une taille comprise entre 0,1 et 50 µm (0,1.10⁻⁶ mètre et 50.10⁻⁶ mètre), et en ce que le mélange de liquide et de matière de germination ayant sur elle une substance cristallisée traverse un filtre en forme de membrane en vue d'une microfiltration, filtre qui possède une taille de pores telle, comprise entre 30 nm (30.10⁻⁹ mètre) et 25 µm (25.10⁻⁶ mètre), que le liquide filtre et que la matière de germination ne filtre pas à travers la membrane.

2. Procédé selon la revendication 1, caractérisé en ce que la taille des pores de la membrane représente 10 à 50% de la taille des particules de matière de germination.

3. Procédé selon la revendication 1 ou 2, caractérisé en ce que la matière de germination se compose d'un type d'argile minérale tel que, par exemple, la bentonite.

4. Procédé selon la revendication 1 ou 2, caractérisé en ce que la matière de germination se compose de particules de silice.

5. Procédé selon la revendication 1 ou 2, caractérisé en ce que la matière de germination se compose de silicates.

6. Procédé selon la revendication 1 ou 2, caractérisé en ce que la matière de germination se compose de diatomées.

7. Procédé selon l'une quelconque des revendications précédentes, caractérisé en ce que le procédé est utilisé pour adoucir l'eau, le pH de la solution étant augmenté pour précipiter CaCO₃ sur la matière de germination.

8. Procédé selon l'une quelconque des revendications 1 à 6, caractérisé en ce que le procédé est employé pour extraire des ions de métaux lourds à l'aide d'un sel métallique (carbonate, sulfure, phosphate, sulfate, fluorure, chromate et analogue) ou d'un hydroxyde métallique cristallisant sur la matière de germination.

9. Procédé selon l'une quelconque des revendications 1 à 6 incluses, caractérisé en ce que le procédé est utilisé pour préparer des produits ultra-purs à partir de solutions aqueuses ou de mélanges organiques.

10. Procédé selon l'une quelconque des revendications 1 à 6 incluses, caractérisé en ce que le procédé est utilisé pour extraire des anions tels que les phosphates, les sulfates, les nitrates et analogues par cristallisation d'un sel dudit anion sur la matière de germination.
